# EUROPÄISCHE PATENTANMELDUNG

(11) **EP 1 458 077 A1**
(43) Veröffentlichungstag der Anmeldung: **15.09.2004**
(21) Anmeldenummer: 04004101.4
(22) Anmeldetag: 24.02.2004
(51) Int. Cl.: H02K 1/27

(54) **Mehrphasiger Elektromotor welcher einen Rotor mit eingebetteten Permanentmagneten aufweist**

(30) Priorität: 12.03.2003 DE 10310647
(71) Anmelder: ebm-papst St. Georgen GmbH & Co. KG, 78112 St. Georgen (DE)
(72) Erfinder: Burgbacher, Martin, 78112 St. Georgen (DE)
(74) Vertreter: Raible, Hans, Dipl.-Ing.

(57) **Zusammenfassung**

Ein Elektromotor hat einen Stator (28) mit einer mehrphasigen Statorwicklung, einen vom Stator (28) durch eine Luftspalt (39) getrennten Rotor (36'), welcher auf seiner dem Luftspalt (39) zugewandten Seite eine Mehrzahl von ausgeprägten Polen mit dem Luftspalt (39) zugewandten Polschuhen (260A, 260B, 260C, 260D) und auf seiner vom Luftspalt (39) abgewandten Seite einen magnetischen Rückschluss (yoke) (200) aufweist, welche Polschuhe (260A, 260B, 260C, 260D) zur Erzeugung einer sinusförmigen Gegen-EMK (uind) dienen. Ferner hat der Motor eine zwischen dem magnetischen Rückschluss (200) und einem Polschuh (260A, 260B, 260C, 260D) vorgesehene Ausnehmung (266A, 266B, 266C, 266D), in welcher mindestens ein Permanentmagnet (262A, 262B, 262C, 262D) angeordnet ist und an welche Ausnehmung (266A, 266B, 266C, 266D) sich auf jeder Seite des mindestens einen Permanentmagneten (262A, 262B, 262C, 262D) etwa in Umfangsrichtung ein magnetisch schlecht leitender Bereich (266A', 266A", 266B', 266B", 266C', 266C", 266D', 266D") anschließt, der auf seiner dem Luftspalt (39) zugewandten Seite an einen Halteabschnitt (270', 270", 272) aus ferromagnetischem Werkstoff angrenzt, welcher dazu dient, den Polschuh (260A, 260B, 260C, 260D) mechanisch mit dem magnetischen Rückschluss (200) zu verbinden. Schließlich hat der Motor mindestens einen magnetischen Nebenschluss (274', 274"), welcher sich von einem dem Luftspalt (39) näher liegenden Quellabschnitt (264A', 264A", 264B', 264B", ..; 294; 296) des mindestens einen Permanentmagneten (262A, 262B, 262C, 262D) durch einen zu diesem Abschnitt benachbarten, magnetisch schlecht leitenden Bereich (266A') hindurch zu einem Zielbereich (270"') des betreffenden Halteabschnitts erstreckt, um in diesen Zielbereich (270"') einen zusätzlichen magnetischen Fluss von diesem Permanentmagneten (262A, 262B, 262C, 262D) einzuspeisen.

## Beschreibung

Die Erfindung betrifft einen Elektromotor mit einem Stator, der mit einer mehrphasigen Statorwicklung versehen und durch einen Luftspalt von einem Rotor getrennt ist, welch letzterem zur Erzeugung eines magnetischen Flusses eine Mehrzahl von Permanentmagneten zugeordnet ist. Sie betrifft insbesondere einen mehrphasigen elektronisch kommutierten Elektromotor.

Derartige Motoren sind in vielfältigen Varianten bekannt. Bei ihnen ist es wichtig, dass sich das Magnetfeld der verwendeten Permanentmagneten nicht im Rotor selbst kurzschließt. Um das zu verhindern, verwendet man im Rotor magnetisch schlecht leitende Abschnitte, und mechanisch tragende Teile des Rotors werden, soweit sie aus weichferromagnetischem Material bestehen, mindest bereichsweise so dünn ausgeführt, dass sie im Betrieb in die magnetische Sättigung kommen und dann praktisch wie Luft wirken und so einen Kurzschluss zwischen benachbarten Rotormagneten verhindern oder reduzieren.

Bei solchen Rotoren für mehrphasige Motoren verwendet man bevorzugt eine sinusförmige Flussverteilung im Luftspalt, also eine sinusförmige induzierte Spannung ("Gegen-EMK"; counter EMF) und einen sinusförmigen Antriebsstrom, was bei einem dreiphasigen System ein konstantes elektromagnetisches Drehmoment ergibt.

Jedoch hat die Erfahrung gezeigt, dass es schwierig ist, bei einem solchen Motor eine induzierte Spannung zu erzeugen, welche der exakten Sinusform gut angenähert oder, mathematisch ausgedrückt, arm an Oberwellen ist, und weil das schwierig ist, ist auch die Erzeugung eines konstanten elektromagnetischen Drehmoments schwierig.

Es ist deshalb eine Aufgabe der Erfindung, einen neuen mehrphasigen Elektromotor bereit zu stellen.

Nach der Erfindung wird diese Aufgabe gelöst durch den Gegenstand des Patentanspruchs 1. Durch den magnetischen Nebenschluss, welcher sich durch den magnetisch schlecht leitenden Bereich zum Zielbereich eines zugeordneten Halteabschnitts erstreckt, wird in den Bereich der Pollücken zwischen benachbarten ausgeprägten Polen des Rotors ein kleiner zusätzlicher magnetischer Fluss eingespeist, und es hat sich gezeigt, dass mit dieser einfachen Maßnahme die Form der Gegen-EMK, besonders im Bereich um deren Nulldurchgänge herum, stärker an eine exakte Sinusform angenähert werden kann, was sich - bei mathematischer Betrachtungsweise - darin ausdrückt, dass die Amplitude zumindest einiger Oberwellen abnimmt. Dies hat zur Folge, dass mit einem solchen Motor ein gleichförmigeres Drehmoment erzeugt werden kann. Sehr vorteilhaft ist dabei, dass der mindestens eine magnetische Nebenschluss, da sozusagen im Inneren des Rotors verborgen, kaum einen Einfluss auf das sogenannte Nutruckmoment hat. Letzteres kann deshalb vor allem durch Wahl einer optimalen Breite der verwendeten Dauermagnete sehr klein gemacht werden. - Die Lage des Zielbereichs wird vom Konstrukteur abhängig vom Motortyp festgelegt. Sie hängt u.a. davon ab, welche Maßnahmen zur Reduzierung des Nutruckmoments bei einem solchen Motor notwendig sind und wird gewöhnlich empirisch, also aufgrund von Versuchen, festgelegt.

Eine bevorzugte Weiterbildung der Erfindung ist Gegenstand des Anspruchs 2. Durch eine solche Ausgestaltung wird die Herstellung sehr einfach, weil die einzelnen Blechschnitte (laminations) eines solchen Rotors durch Stanzen hergestellt werden können, wobei kleinere Ausnehmungen ggf. durch andere Verfahren hergestellt werden müssen, z.B. durch Erodieren.

Die magnetisch schlecht leitenden Bereiche können gemäß Anspruch 3 in einfacher Weise durch Ausnehmungen im Blechpaket gebildet werden, da Luft ein schlechter magnetischer Leiter ist. Dort, wo solche Ausnehmungen nicht in Frage kommen, z.B. aus Festigkeitsgründen, kann man gemäß Anspruch 4 Abschnitte aus ferromagnetischem Material verwenden, die sich in der Sättigung befinden und dann ähnlich wirken wie Luft.

Eine sehr vorteilhafte Ausgestaltung der Erfindung, besonders für einen Innenläufermotor, ist Gegenstand des Anspruchs 7. Durch die abgeschrägte Grenzfläche kann auch die Ausnehmung für die Aufnahme des Magneten eine entsprechende Form erhalten, und dies erleichtert sehr die Herstellung des magnetischen Nebenschlusses, insbesondere durch Stanzen. Auch kann bei einer Ausgestaltung gemäß Anspruch 9 durch Variieren der Breite des Polschuhs, der Breite der verwendeten Dauermagnete, und der Form der Polenden das Nutrucken in einfacher Weise optimiert, also möglichst klein gemacht werden.

Eine bevorzugte Weiterbildung für Permanentmagnete mit rechteckförmigem Querschnitt ist in den Ansprüchen 10 und 11 angegeben.

Insbesondere durch eine Variation der Breite der Dauermagnete gelingt es bei der Erfindung, das Nutrucken, das bei solchen Motoren ein erhebliches Problem darstellen kann, zu reduzieren, ohne dass hierdurch die Form der induzierten Spannung beeinträchtigt wird. Umgekehrt beeinträchtigen bei der vorliegenden Erfindung die Maßnahmen, die man zur Verbesserung der Form der induzierten Spannung trifft, nicht oder kaum das Nutrucken, so dass sich ein Motor ergibt, der gute Laufeigenschaften hat und sich besonders dort eignet, wo auf die Gleichmässigkeit des Drehmoments besonderer Wert gelegt werden muss. Dies gilt z.B. für sogenannte Lenkhilfen in Kraftfahrzeugen.

Eine weitere Lösung der gestellten Aufgabe ist Gegenstand des Patentanspruchs 14. Es gelingt so, mit einfachen Mitteln, die Form der induzierten Spannung im Bereich ihres Nulldurchgangs zu verbessern.

Weitere Einzelheiten und vorteilhafte Weiterbildungen der Erfindung ergeben sich aus den im folgenden beschriebenen und in der Zeichnung dargestellten, in keiner Weise als Einschränkung der Erfindung zu verstehenden Ausführungsbeispielen, sowie aus den übrigen Unteransprüchen. Es zeigt:
- Fig. 1: einen Längsschnitt durch einen dreiphasigen sinuskommutierten kollektorlosen Gleichstrommotor nach einer bevorzugten Ausführungsform der Erfindung,
- Fig. 2: einen vergrößerten Längsschnitt durch das Rotorblechpaket des Motors der Fig. 1, gesehen längs der Linie VI-VI der Fig. 5,
- Fig. 3: eine nochmals vergrößerte Darstellung einer Einzelheit, die in Fig. 2 mit III bezeichnet ist,
- Fig. 4: eine vergrößerte Draufsicht auf ein Blech des Rotorblechpakets,
- Fig. 5: eine vergrößerte Draufsicht auf eine Endscheibe des Rotorblechpakets,
- Fig. 6: einen Schnitt, gesehen längs der Linie VI-VI der Fig. 5,
- Fig. 7: eine stärker vergrößerte Darstellung der Einzelheit VII der Fig. 6,
- Fig. 8: eine stärker vergrößerte Darstellung der Einzelheit VIII der Fig. 6,
- Fig. 9: eine teilweise schematisierte Darstellung von Stator und Rotor des Motors nach Fig. 1, gesehen in einer üblichen Schnittdarstellung,
- Fig. 10: eine vergrößerte Darstellung des Rotors, in einer Schnittdarstellung,
- Fig. 11: eine Darstellung, welche für eine bestimmte Rotorstellung die Verteilung der magnetischen Flusslinien in einer Motorhälfte zeigt; diese Darstellung zeigt eine Flussverteilung, die erheblich von der Sinusform abweicht,
- Fig. 12: eine Darstellung einer Flussänderung dØ12/dt, welche bei Fig. 11 zwischen den Stellen 1 und 2 auftritt, wenn sich der Rotor 36 mit konstanter Geschwindigkeit um einen Winkel von 360° el. = 180° mech. dreht; ferner zeigt Fig. 12 den Verlauf einer Flussänderung d0/dt, welche aus dØ12/dt errechnet ist und die Form der Gegen-EMK uind bestimmt,
- Fig. 13: eine Darstellung der Gegen-EMK uind analog Fig. 12,
- Fig. 14: eine Fourieranalyse der in Fig. 13 dargestellten Spannung, wobei links die Ordinalzahl der Oberwelle und rechts deren prozentualer Anteil dargestellt sind, z.B. 1. Oberwelle = 100 %,
- Fig. 15: eine Darstellung einer verbesserten Rotorform nach einer bevorzugten Ausführungsform der Erfindung, bei der im Bereich der Pollücke ein zusätzlicher kleiner Magnetfluss eingespeist wird,
- Fig. 16: eine vergrößerte Darstellung einer Einzelheit der Fig. 15,
- Fig. 17: eine Darstellung analog Fig. 11, aber für den Rotor 36' gemäß Fig. 15; die Flussverteilung im Luftspalt ist hier als Folge der Fluss-Einspeisung besser an die Sinusform angenähert,
- Fig. 18: eine Darstellung der Flussänderung dØ12/dt, welche bei Fig. 17 zwischen den Stellen 1 und 2 auftritt, wenn sich der Rotor 36' mit konstanter Geschwindigkeit um einen Winkel von 360° el. = 180° mech. dreht; ferner zeigt Fig. 18 den Verlauf einer Flussänderung d0/dt, die aus dØ12/dt errechnet ist und welche die Form der Gegen-EMK uind bestimmt; die Flussänderung dØ/dt ist eine gute Approximation einer Sinuswelle,
- Fig. 19: eine Darstellung der Gegen-EMK Uind analog Fig. 18,
- Fig. 20: eine Fourieranalyse der in Fig. 18 dargestellten Spannung; links ist die Oberwelle und rechts deren prozentualer Anteil angegeben, z.B. 3. Oberwelle = 0,22 %,
- Fig. 21: einen Rotor 36' gemäß einer ersten Variante zu der Rotorform der Fig. 15 bis 17,
- Fig. 22: einen vergrößerten Ausschnitt aus Fig. 21, und
- Fig. 23: eine Variante zu Fig. 22.

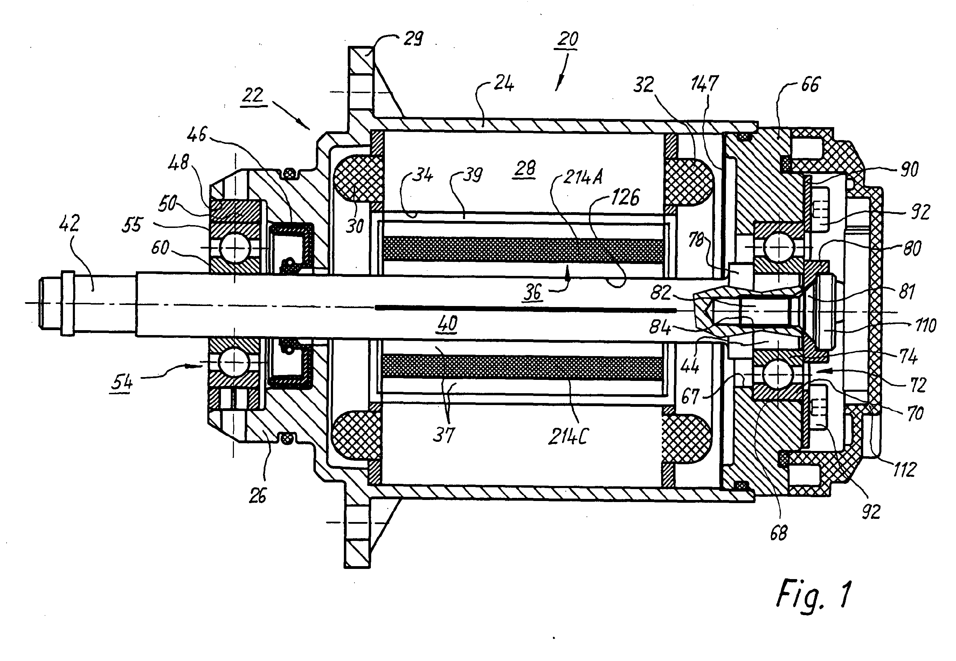

**Fig. 1** zeigt einen elektronisch kommutierten Innenläufermotor 20 mit einem Gehäuse 22, das ein zylindrisches Gehäuseteil 24, ein A-Lagerschild 26 und einen Befestigungsflansch 29 aufweist.

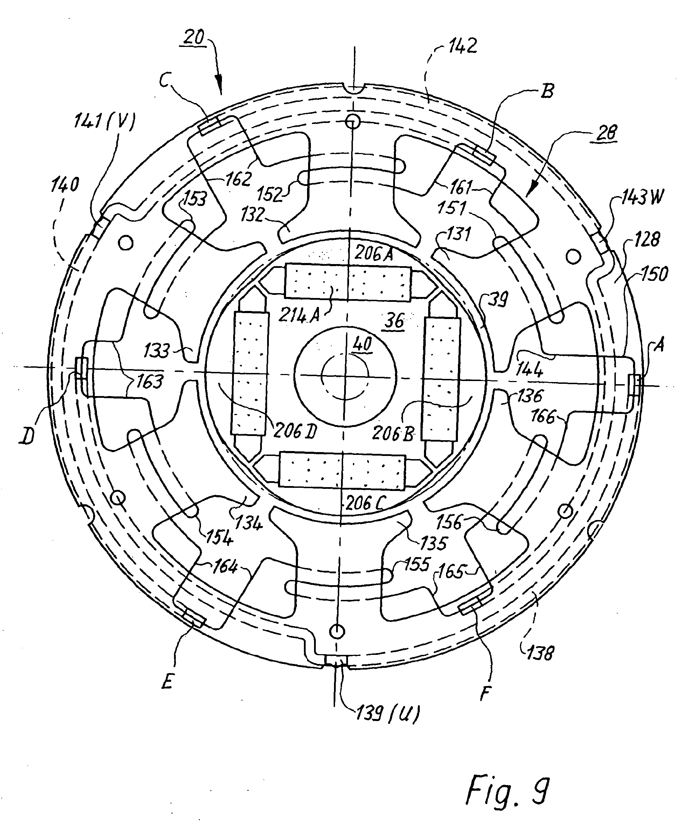

In dem zylindrischen Gehäuseteil 24 ist das Blechpaket 128 (Fig. 9) eines Außenstators 28 angeordnet, dessen Wickelköpfe bei 30 und 32 angedeutet sind. Der Stator 28 hat eine Innenausnehmung, in der ein vierpoliger Innenrotor 36 mit einem Blechpaket 37 aus Elektroblech (DIN 46400, Blatt 1), bevorzugt Blech V400, und mit Permanentmagneten 214A bis 214D (vgl. Fig. 9 bis 11) auf einer Welle 40 angeordnet ist, deren Antriebsende mit 42 und deren inneres Wellenende mit 44 bezeichnet sind. Ein Luftspalt 39 trennt den Stator 28 vom Rotor 36. Ein solcher Motor 20 kann auch als permanent erregte Synchron-Innenläufermaschine oder als sinuskommutierter kollektorloser Gleichstrommotor bezeichnet werden.

Im A-Lagerschild 26 ist in üblicher Weise eine Dichtung 46 für die Welle 40 vorgesehen. Ferner befindet sich dort eine Ausnehmung 48, in der ein Führungsglied 50 für den Außenring 55 eines Wälzlagers 54 befestigt ist. Der Innenring 60 des Wälzlagers 54 ist auf die Welle 40 aufgepresst.

Im offenen Ende des zylindrischen Gehäuseteils 24 ist ein B-Lagerschild 66 befestigt. Dieses hat eine mit einer Ringschulter 67 versehene Ausnehmung 68 für den Außenring 70 eines Wälzlagers 72, dessen Innenring 74 auf dem Wellenende 44 befestigt ist. Hierzu hat die Welle 40 einen Ringbund 78, mit dem sie gegen die linke Seite des Innenrings 74 anliegt. Gegen seine rechte Seite liegt ein Formstück 80 an, das durch den Senkkopf 81 einer Senkkopfschraube 82 in Richtung zur Welle 40 gepresst wird und etwa ringförmig ausgebildet ist. Die Schraube 82 ist in ein Innengewinde 84 im Wellenende 44 eingeschraubt und presst dadurch das Formstück 80 in Richtung zum Innenring 74.

Zum sicheren Einspannen des Außenrings 70 dient ein flaches, ringförmiges Teil 90, das durch drei gleichmäßig verteilte Schrauben 92 an seiner äußeren Peripherie am Lagerschild 66 befestigt ist, und das mit seinem radial inneren Teil gegen den Außenring 70 anliegt und diesen nach links gegen die Schulter 67 presst. (Die Ausnehmung 68 ist etwas kürzer als der Außenring 70).

Die Schraube 82 ist eine Senkkopfschraube mit einem Innensechskant. Das Formstück 80 besteht aus einem nicht ferromagnetischen Werkstoff, bevorzugt Messing.

Nachdem das Formstück 80 mittels der Schraube 82 am Wellenende 44 befestigt worden ist, wird in einer zylindrischen Ausnehmung desselben ein Steuermagnet 110 befestigt, z.B. durch Kleben. Der Steuermagnet 110 ist auf seiner in Fig. 1 rechten Seite mit einem Magnetisierungsmuster versehen und dient zur Steuerung von (nicht dargestellten) magnetoresistiven Widerständen, die an einem Gehäusedeckel 112 auf der B-Seite des Motors 20 angeordnet sind und zur Erfassung der Drehstellung des Rotors 36 dienen, um Form und Kommutierung der Ströme im Stator 28 exakt zu steuern. Die Kommutierung mittels solcher durch einen Steuermagneten 110 gesteuerten Rotorstellungssensoren ist dem Fachmann in vielerlei Varianten bekannt und bedarf daher keiner weiteren Erläuterung. Das Magnetisierungsmuster auf der rechten Seite des Steuermagneten 110 wird bevorzugt erst erzeugt, nachdem dieser im Formstück 80 befestigt worden ist und geschieht bevorzugt dann, wenn die Dauermagnete des Rotors 36 magnetisiert werden.

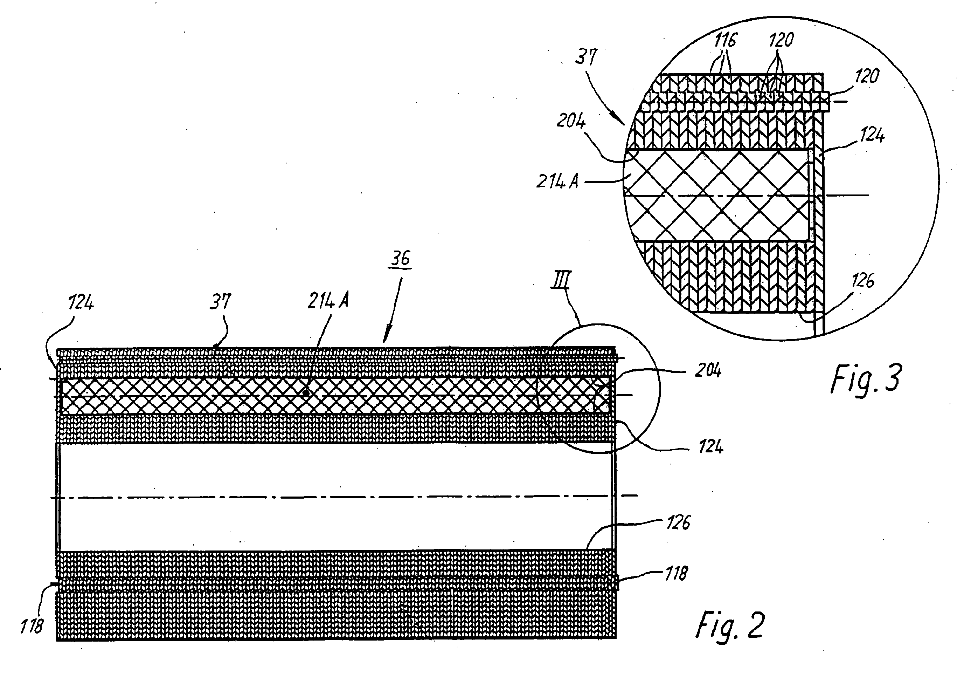

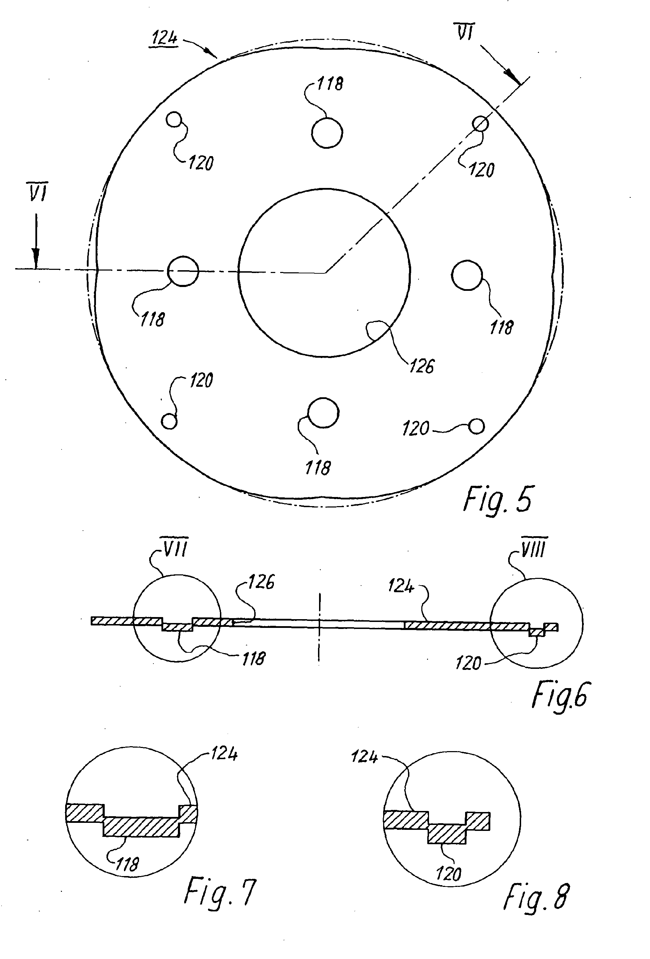

**Fig. 2** zeigt einen Schnitt durch das Blechpaket 37 des Rotors 36, gesehen längs der Linie VI-VI der Fig. 5. Das Blechpaket 37 ist aus Blechen 116 aufgebaut, wie das in **Fig. 3** in starker Vergrößerung dargestellt ist.

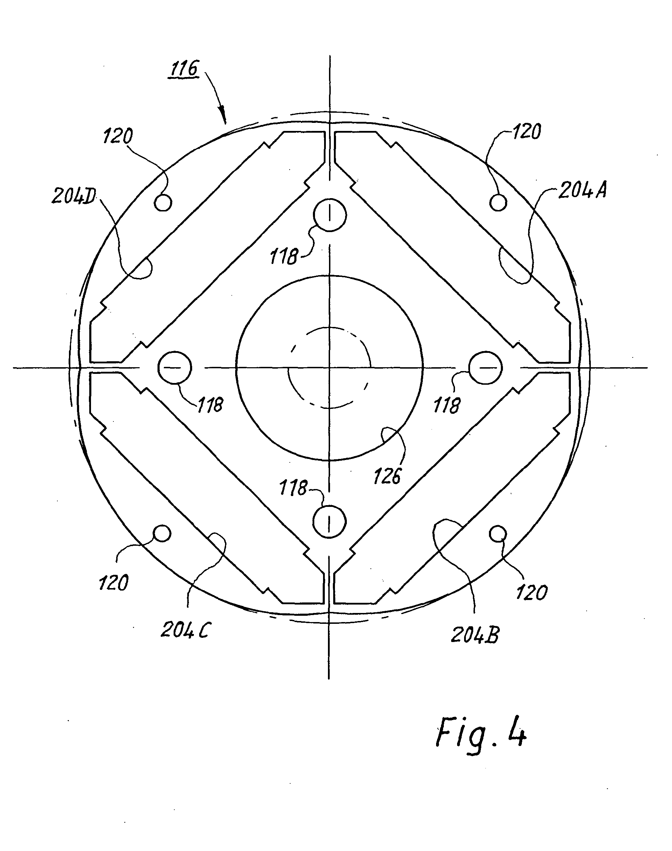

**Fig. 4** zeigt eine Draufsicht auf ein solches Blech 116, z.B. aus Dynamoblech V400, wie es nachfolgend bei Fig. 9 bis 11 näher beschrieben wird. Es ist mit insgesamt acht Noppen für eine sogenannte Stanzpacketierung versehen, nämlich mit vier inneren Noppen 118, welche in Vergrößerung der Darstellung nach Fig. 7 entsprechen, und mit vier äußeren Noppen 120, welche in Vergrößerung der Darstellung nach Fig. 8 entsprechen. Fig. 3 zeigt, wie die äußeren Noppen 120 ineinander gepresst sind und dadurch das Blechpaket 37 zusammenhalten. Diese Darstellung gilt analog genauso für die Noppen 118, so dass zwei benachbarte Bleche 116 an insgesamt acht Stellen durch diese Noppenverbindungen verbunden sind.

Im Blechpaket 37 befinden sich vier Neodym-Bor-Dauermagnete 214A bis 214D in Taschen 204A bis 204D, vgl. die Fig. 9 bis 11. Bevorzugt haben diese Dauermagnete eine Halte-Remanenz von 1,2 T. Die Taschen 204A bis 204D sind an beiden Längsenden des Rotors 36 verschlossen durch identische Abschlussbleche 124, von denen eines in den Fig. 5 bis 8 dargestellt ist. Ein solches Abschlussblech 124 unterscheidet sich von den Rotorblechen 116 durch zweierlei Dinge:
a) Es hat keine Taschen 204.
b) Es ist aus einem nicht magnetischen Werkstoff hergestellt, gewöhnlich - aus Festigkeitsgründen - aus einem rostfreien Stahl, z.B. X12 CrNi17.7. Dieses Blech 124 hat bevorzugt die gleiche Umrissform wie die Rotorbleche 116 und hat ebenfalls vier innere Noppen 118 und vier äußere Noppen 120.

Die Abschlussbleche 124 verhindern zuverlässig, dass Teile eines Rotormagneten 214 aus einer der Taschen 204 in das Innere des Motors 20 gelangen, z.B. in dessen Luftspalt 39.

Fig. 6 zeigt einen Schnitt durch ein Abschlussblech 124, aus dem die Form der Noppen 118, 120 grob erkennbar ist, und Fig. 7 und 8 zeigen die Noppen 118, 120 in etwa fünffacher Vergrößerung. Diese Noppen passen also mit denen der Rotorbleche 116 exakt zusammen und werden bei der Packetierung mit diesen zusammengesteckt und mit einer vorgegebenen Kraft in einer Presse zusammengepresst, um spezifizierte Werte (Zugkraft; Scherfestigkeit) zu erhalten.

Das Blechpaket 37 hat eine Innenausnehmung 126, in welche die Welle 40 eingepresst wird, welche dadurch zu einem Bestandteil der magnetischen Kreises des Rotors 36 wird.

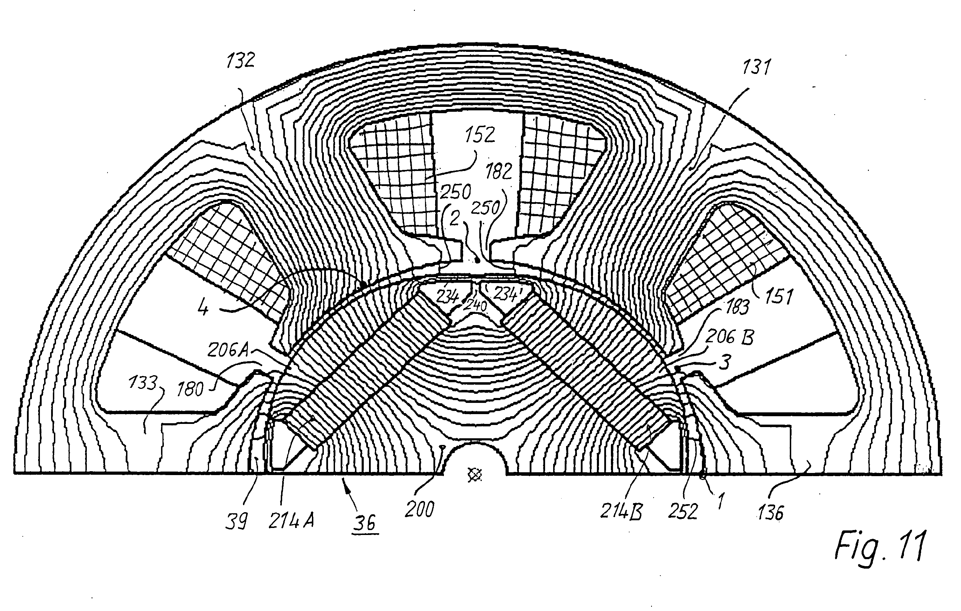

**Fig. 9** zeigt eine übliche schematisierte Darstellung von Außenstator 28 und Rotor 36. Die Statoranordnung 28 hat ein übliches Blechpaket 128, bei dem in einem Winkelbereich von 360° mech. sechs Nuten mit Nutzähnen 131, 132, 133, 134, 135 und 136 vorgesehen sind, zwischen denen entsprechende Nutöffnungen liegen, z.B. die in Fig. 11 mit 180 und 182 bezeichneten Nutöffnungen. An einer Stirnseite der Statoranordnung 28 befinden sich, in einem (nicht dargestellten) Isolator eine U-Kupferschiene 138 mit einer Anschlussfahne 139, eine V-Kupferschiene 140 mit einer Anschlussfahne 141, und eine W-Kupferschiene 142 mit einer Anschlussfahne 143, welche Schienen sich jeweils über einen Winkel von etwa 180° el. erstrecken und an der Stirnseite der Statoranordnung 28 angeordnet sind. Da sich die Kupferschienen 138, 140, 142 jeweils nur über 180° mech. erstrecken, befinden sich an jeder Stelle des Umfangs nur zwei Kupferschienen, z.B. an der 12-Uhr-Stellung der Fig. 9 die Schienen 142 (außen) und 140 (innen). Jede Schiene verläuft über etwa 90° mech. radial außen, und über etwa 90° mech. radial weiter innen, vgl. Fig. 9.

Bezogen auf das Zifferblatt einer Uhr erstreckt sich die U-Schiene 138 etwa von 3 bis 9 Uhr. Die V-Schiene 140 erstreckt sich von etwa 7 bis 1 Uhr. Die W-Schiene 142 erstreckt sich von etwa 11 bis 5 Uhr. Diese Schienen sind voneinander isoliert. Ihre Anschlussfahnen 139, 141, 143 dienen zur elektrischen Verbindung mit einer Leiterplatte 147 (Fig. 1), auf der Leistungstransistoren zur Steuerung der Ströme in der Statorwicklung angeordnet sind. Dies sind bevorzugt eingeprägte sinusförmige Ströme, die von einer entsprechenden Vorrichtung geliefert werden, wie das bei solchen Motoren bekannt ist. Durch die Kupferschienen erhält man extrem kurze und induktionsarme Zuleitungen und dadurch niedrige Verluste in diesen Zuleitungen, auch bei hohen Drehzahlen.

Auf den Zähnen des Blechpakets 128 befinden sich identische Wicklungsspulen, deren - übereinstimmender - Wicklungssinn in Fig. 9 beispielhaft dargestellt ist. Auf dem ersten Zahn 131 befindet sich eine erste Wicklungsspule 151. Man beginnt mit dem Wickeln dieser Spule, nachdem der Anfang 150 des Wicklungsdrahtes 144 an einer Stelle A (3 Uhr) an der U-Schiene 138 befestigt wurde.

Die Schiene 142 ist an der Stelle des Anschlusses A voll vom erwähnten Isolator umschlossen, so dass ein Kurzschluss zwischen den Schienen 138 und 142 dort unmöglich ist. Dies gilt analog für die anderen Schienen, d.h. diese sind zwischen den Anschlussstellen voll vom erwähnten Isolator umschlossen, und an den Anschlussstellen ragt immer nur der Anschluss einer Schiene aus diesem Isolator heraus. Hierdurch ergibt sich eine hohe Betriebssicherheit.

Anschließend an die Spule 151 wickelt man die zweite Wicklungsspule 152 auf dem zweiten Zahn 132, dann die dritte Wicklungsspule 153 auf dem dritten Zahn 133, dann die vierte Wicklungsspule 154 auf dem vierten Zahn 134, die fünfte Wicklungsspule 155 auf dem fünften Zahn 135, und schließlich die sechste Wicklungsspule 156 auf dem sechsten Zahn 136. Es handelt sich also um eine gesehnte, nicht überlappende Wicklung, die maschinell leicht herzustellen ist, auch deshalb, weil eine Nutschrägung der Statornuten gewöhnlich entfallen kann.

Zwischen den Spulen 151 und 152 entsteht eine erste Drahtschleife 161, die an einer Stelle B (1 Uhr) mit der V-Schiene 140 elektrisch und mechanisch verbunden wird, bevorzugt, ohne den Wicklungsdraht 144 zu unterbrechen.

Zwischen den Spulen 152 und 153 entsteht eine zweite Drahtschleife 162, die an einer Stelle C (11 Uhr) mit der W-Schiene 142 verbunden wird.

Zwischen den Spulen 153 und 154 entsteht eine dritte Drahtschleife 163, die an einer Stelle D (9 Uhr) mit der U-Schiene 138 verbunden wird, welche also die Stellen A und D elektrisch miteinander verbindet.

Zwischen den Spulen 154 und 155 entsteht eine vierte Drahtschleife 164, die an einer Stelle E (7 Uhr) mit der V-Schiene 140 verbunden wird, welche die Stellen B und E elektrisch miteinander verbindet.

Zwischen den Spulen 155, 156 befindet sich eine fünfte Drahtschleife 165, die an einer Stelle F (5 Uhr) mit der W-Schiene 142 verbunden wird, welche die Stellen C und F elektrisch miteinander verbindet.

Das freie Ende der Spule 156 ist mit 166 bezeichnet und an der Stelle A mit der U-Schiene 138 und dem Wicklungsanfang 150 verbunden. Damit ist die Wicklung abgeschlossen.

Aus der vorstehenden Beschreibung geht hervor, dass es sich um eine Dreieckswicklung ohne überlappende Spulen handelt, bei der in jedem Strang zwei Wicklungsspulen parallelgeschaltet sind, nämlich im Strang zwischen den Anschlüssen U und V die Spulen 151 und 154, im Strang zwischen den Anschlüssen V und W die Spulen 152 und 155, und im Strang zwischen den Anschlüssen W und U die Spulen 153 und 156. Diese Stränge werden durch eine (nicht dargestellte) elektronische Steuereinrichtung in der bei einem Dreiphasensystem üblichen Weise mit eingeprägten sinusförmigen Strömen beaufschlagt, um ein weitgehend konstantes elektromagnetisches Drehmoment zu erzeugen. Ggf. können auch andere Mehrphasensysteme verwendet werden, doch wird ein Dreiphasensystem wegen seiner Einfachheit bevorzugt.

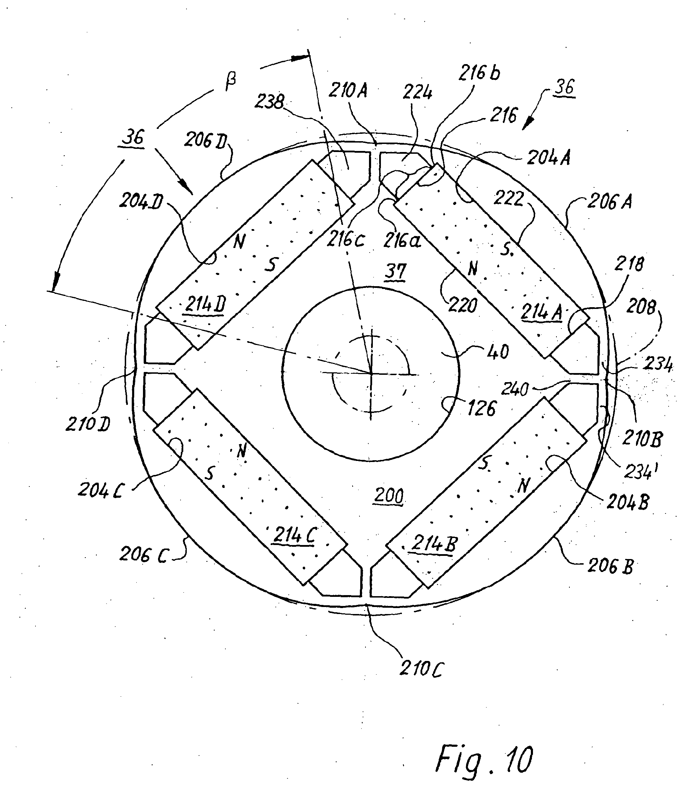

**Fig. 10** zeigt im Schnitt den Aufbau des vierpoligen Rotors 36, in stark vergrößertem Maßstab (ca. 5-fach vergrößert). Sein Blechpaket 37 enthält vier identische Taschen 204A, 204B, 204C, 204D, welche jeweils voneinander einen Winkelabstand von 90° mech. = 180° el. haben.

Die vier Rotorpole sind mit 206A bis 206D bezeichnet und als ausgeprägte Pole ausgebildet. Um dies zu verdeutlichen, ist ein den Rotor 36 umhüllender Zylinder 208 mit strichpunktierten Linien angedeutet. Man erkennt, dass das Blechpaket 37 jeweils im Bereich seiner Pollücken 210A bis 210D einen leicht verringerten Durchmesser hat, der z.B. 97 % des Durchmessers in der Polmitte betragen kann, wobei der Durchmesser von einer Pollücke zur Polmitte hin kontinuierlich zunimmt. Die Zunahme kann z.B. einem Kreisbogenabschnitt entsprechen. Durch diese Ausgestaltung wird die Flussverteilung am Rotorumfang im wesentlichen sinusförmig, so dass man im Betrieb eine etwa sinusförmige Gegen-EMK erhält.

Die Tasche 204A, welche als Beispiel in **Fig. 11** vergrößert dargestellt ist, erstreckt sich zwischen den Pollücken 210A und 210B, die Tasche 204B zwischen den Pollücken 210B und 210C, etc., wie dargestellt. In jeder Tasche befindet sich ein im wesentlichen rechteckförmiger, radial magnetisierter Permanentmagnet 214A bis 214D, bevorzugt ein Neodym-Bor-Magnet mit einer magnetischen Remanenz von 1,2 T, der bei einem ausgeführten Rotor im Querschnitt die Maße 3,5 x 12 mm und eine Länge von 27 mm hatte. Die Richtung der Magnetisierung wechselt ab, d.h. der Magnet 214A hat radial außen einen Südpol, der nächste Magnet 214B außen einen Nordpol, etc., wie dargestellt. Als Maß für die Breite der Magnete 214A bis 214D ist beim Magneten 214D ein Winkel beta eingetragen, der hier etwa 66° mech. = 132° el. beträgt. Dieser Winkel beta wird, wie dargestellt, begrenzt durch zwei Linien, die durch die Mitten der Polenden gehen. Die Größe des Winkels beta hat einen sehr starken Einfluß auf die Größe des vom Rotor 36 bei seiner Drehung erzeugten Reluktanzmoments, auch cogging torque oder Nutruckmoment genannt. Dies wird nachfolgend erläutert.

Die Taschen 204A, 204B etc. sind im Querschnitt länger als die Dauermagnete 214A, 214B etc., werden also von diesen nicht ganz ausgefüllt. Dies wird am Beispiel der Tasche 204A erläutert, da die anderen Taschen 204 und Dauermagnete 214 einen identischen Aufbau haben.

Der Magnet 214A hat ein der Pollücke 210A zugewandtes oberes Längsende 216 und ein der Pollücke 210B zugewandtes unteres Längsende 218. Mit seinen breiten Enden 220 (radial innen) und 222 (radial außen) liegt er vollflächig gegen das Blechpaket 37 an. Dagegen liegt er mit seinem oberen Längsende 216 nur gegen zwei kurze Schultern 216a (radial innen) und 216b (radial außen) des Blechpakets 37 an, während er mit einem zentralen Bereich 216c des oberen Längsendes 216 an einen hohlen Abschnitt 224 angrenzt, der im Querschnitt hier die Form eines unregelmäßigen Fünfecks hat. Der hohle Abschnitt 224, und die entsprechenden sieben anderen hohlen Abschnitte sind magnetisch schlecht leitend, bilden deshalb jeweils einen magnetischen Widerstand zwischen benachbarten Dauermagneten 214, und verhindern so einen magnetischen Kurzschluss zwischen den vier Dauermagneten 214A bis 214D. Ersichtlich sind die Verhältnisse am unteren Ende 218 des Dauermagneten 214A identisch und werden deshalb nicht gesondert beschrieben.

Der hohle Abschnitt 224 hat gemäß Fig. 11 einen radial inneren Abschnitt, der im wesentlichen parallel zur inneren Begrenzung 220 verläuft und über eine Schulter 216a in die innere Begrenzung 220 übergeht.

Auch hat der hohle Abschnitt 224 einen radial äußeren Abschnitt, der parallel zur äußeren Begrenzung 222 verläuft und über eine Schulter 216b in diese übergeht.

Der äußere Abschnitt geht unter einem stumpfen Winkel über in einen Außenabschnitt, der sich im wesentlichen parallel zur dortigen Peripherie des Rotors 36 und bis fast zur Pollücke 210A erstreckt. Dort erstreckt sich ein schmaler Steg 234 (Fig. 11) mit einer Breite von z.B. 0,5 mm bis etwa zur Pollücke 210A. Auch erstreckt sich zwischen dem hohlen Abschnitt 224 und dem zu ihm spiegelbildlichen hohlen Abschnitt 238 der Ausnehmung 204D ein schmaler Steg 240 (Fig. 11), der z.B. eine Breite von 0,5...1 mm und eine Länge von 1 mm haben kann.

Bei einer optimierten Ausführungsform hatte die Schulter 216b eine Breite von ca. 0,5 mm, und der Abschnitt 228 eine Breite von ca. 1 mm. Hierbei ergab sich ein gesamtes Nutruckmoment, das praktisch den Wert Null hatte.

Wie man erkennt, haben die schmalen Abschnitte 234, 240 etc. hauptsächlich eine mechanisch tragende Funktion. Der Abschnitt 234 arbeitet wegen der hohen Magnetflussdichte von etwa 2 T in der Sättigung und wirkt daher magnetisch wie ein Luftspalt.

Es hat sich in der Praxis gezeigt, dass die Größe der Schulter 216b und ihr Verhältnis zur Länge des Abschnitts 228 die Höhe des Nutruckmoments sehr stark beeinflusst, ebenso die Größe des Winkels beta, so dass durch Optimierung dieser Werte das Rastmoment sehr klein oder sogar zu Null gemacht werden kann. Dadurch vermeidet man die Notwendigkeit, die Nuten des Stators zu schrägen (to skew) und/oder eine überlappende Wicklung zu verwenden, was höhere Kosten bei der Herstellung verursachen würde. Ein solcher Rotor 36 eignet sich deshalb sehr gut als Antrieb in einer Servolenkung.

Bei einem Motor nach den Fig. 1 bis 10 kommt es für die praktische Verwendbarkeit u.a. auf zwei Dinge an:
a) Auf die Größe des Nutruckmoments (cogging torque).
   Dieses Drehmoment kann gemessen werden, wenn der Motor stromlos ist und von außen angetrieben wird. Dieses Drehmoment sollte möglichst klein sein, da es einen Benutzer stören könnte. Es wird hauptsächlich optimiert durch Optimierung der Breite beta der Dauermagneten, die z.B. bei Fig. 10 etwa 130 bis 135° el. beträgt.
b) Auf die Gleichförmigkeit des elektromagnetischen Drehmoments, das der Motor im Betrieb erzeugt. Bei einem dreiphasigen Motor verwendet man gewöhnlich ein System, bei welchem den Statorwicklungen drei sinusförmige Ströme zugeführt werden, die um 120° el. in der Phase versetzt sind. Wenn der Motor eine induzierte Spannung (Gegen-EMK) hat, welche die Form eines Sinus hat, ergibt sich in diesem Fall bekanntlich ein konstantes elektromagnetisches Drehmoment.

Eine sinusförmige induzierte Spannung hat zur Voraussetzung, dass die Flussverteilung im Luftspalt 39 des Motors sinusförmig ist.

**Fig. 11** zeigt in einer etwas verzerrten Darstellung die Flussverteilung im Luftspalt 39 für einen Motor, dessen Aufbau etwa Fig. 9 entspricht. Man erkennt, dass sich der Fluss hauptsächlich auf den Bereich der Dauermagnete 214A, 214B konzentriert, und dass im Bereich der Stege 234, 234', 240, welche die Polschuhe 206A, 206B mechanisch mit dem magnetischen Rückschluss 200 verbinden, also im Bereich der Pollücken, ein sehr geringer magnetischer Fluss 250, 252 vorhanden ist, so dass dort die induzierte Spannung sehr niedrig wird und folglich von der Sinusform stark abweicht.

Fig. 9 zeigt eine gesehnte Wicklung (short pitch winding). Dort liegt zwischen den Statorpolen 133 und 132 eine Nut 180. Zwischen den Statorpolen 132 und 131 liegt eine Nut 182, vgl. Fig. 11, und zwischen den Statorpolen 131 und 136 eine Nut 183, vgl. Fig. 11. Die Nuten 180, 182 haben einen Abstand von 120° el. Ebenso haben die Nuten 182, 183 einen Abstand von 120° el. Die Wicklung auf dem Pol 132 ist mit 152 bezeichnet, und die Wicklung auf dem Pol 131 mit 151.

In Fig. 11 sind vier Punkte eingetragen:
Punkt 1 liegt in der Mitte des Statorpols 136.
Punkt 2 liegt in der Pollücke 182 zwischen den Statorpolen 132 und 131.
Punkt 3 liegt in der Pollücke 183 zwischen den Statorpolen 131 und 136.
Punkt 4 liegt in der Mitte des Statorpols 132.

Wenn sich der Rotor 36 dreht, erhält man zwei Flussänderungen, die man analytisch berechnen kann.

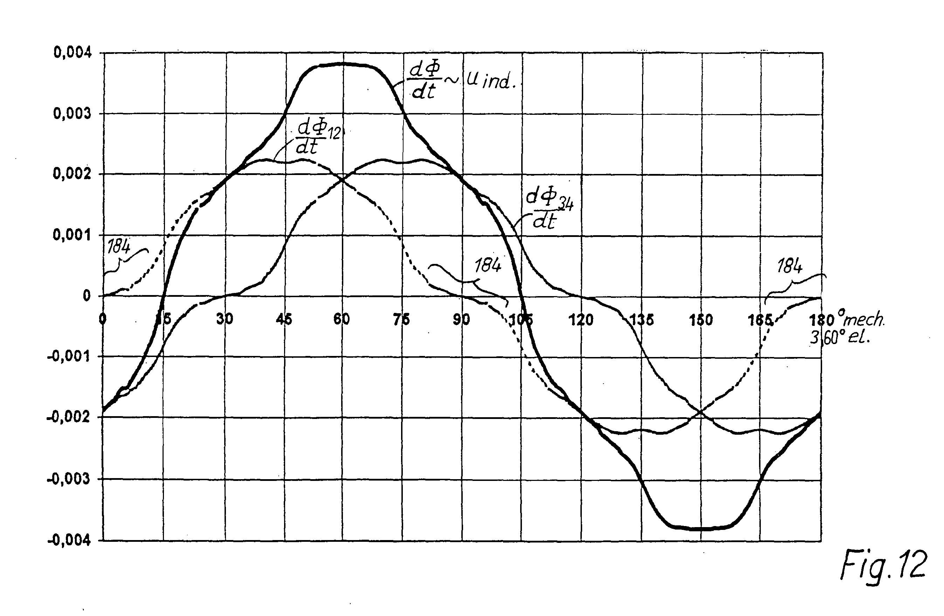

Die eine Flussänderung ist die zwischen den Stellen 1 und 2 der Fig. 11, und diese ist deshalb in Fig. 12 mit dØ12/dt bezeichnet.

Die andere berechenbare Flussänderung ist die zwischen den Stellen 3 und 4 der Fig. 11, die in Fig. 12 mit dØ34/dt bezeichnet ist. Dies sind also Flussänderungen, die auftreten, wenn sich der Rotor 36 dreht.

Addiert man diese beiden Flussänderungen, so erhält man die Änderung des gesamten Flusses dØ/dt im Statorpol 131 abhängig von der Zeit bzw. dem Drehwinkel, und diese Änderung entspricht dem Verlauf der induzierten Spannung uind in der Statorwicklung 151, wenn sich der Rotor 36 dreht.

Man nennt eine Wicklung 152 (oder 151), die einen Fluss von weniger als 180° el. erfasst, eine "gesehnte Wicklung". Die Spannung, die in der Wicklung 151 induziert wird, hat folglich eine andere Form als eine Spannung, die in einer - hier nicht vorhandenen - fiktiven Wicklung induziert würde, deren Statorpol eine Erstreckung von 180° el. hätte und die man folglich als "Durchmesserwicklung" (full pitch winding) bezeichnet.

Die magnetischen Flussänderungen dØ12/dt und dØ34/dt, die bei einer Drehung des Rotors 36 auftreten, kann man mit den üblichen analytischen Methoden aus Schaubildern analog Fig. 11 berechnen. Sie sind in Fig. 12 dargestellt, und man erkennt, dass sie im Bereich ihrer Nulldurchgänge, z.B. bei 0° el., sehr flache Abschnitte 184 haben, was für die Form des elektromagnetischen Drehmoments eines solchen Motors ungünstig ist.

Aus dØ12/dt lässt sich der Verlauf der Flussänderung d0/dt im Statorpol 131 berechnen, wie er den Verlauf der induzierten Spannung uind in der Wicklung 151 und damit den Verlauf des elektromagnetisch erzeugten Drehmoments bestimmt.

Hierzu wird gemäß Fig. 12 die Flussänderung dØ12/dt mit einer Phasenverschiebung von 30° mech. = 60° el. nochmals als dØ34/dt gezeichnet, und diese beiden Flussänderungen ergeben durch Addition die Flussänderung d0/dt, die in Fig. 12 dargestellt ist. Diese Flussänderung dØ/dt ist für den Verlauf des elektromagnetisch erzeugten Drehmoments maßgeblich und bestimmt die Form der Gegen-EMK des Motors, die man im Sprachgebrauch des Elektromaschinenbaus als "induzierte Spannung uind" bezeichnet. Man erkennt in Fig. 12, dass die Flussänderung d0/dt und damit die Gegen-EMK keine reine Sinusform hat, sondern stark von dieser abweicht.

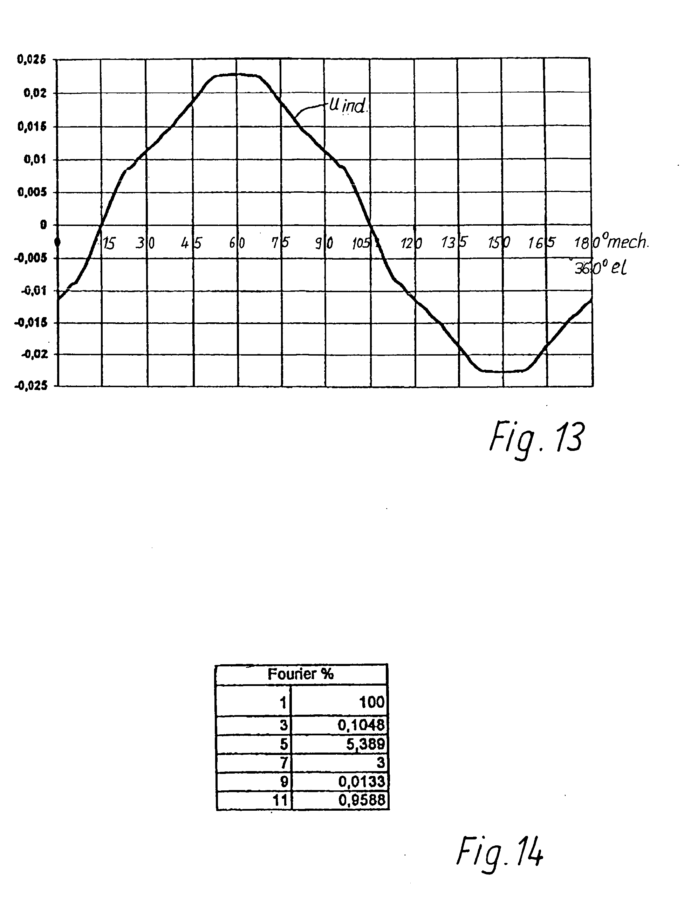

**Fig. 13** zeigt die induzierte Spannung uind, deren Form mit der der Flussänderung d0/dt praktisch übereinstimmt, und **Fig. 14** zeigt das Resultat einer Fourieranalyse. Wegen der Sehnung der Statorwicklung ist die 3. Oberwelle klein, aber die 5., 7. und 11. Oberwellen sind groß, und es ergibt sich ein entsprechend ungünstiges elektromagnetisches Drehmoment.

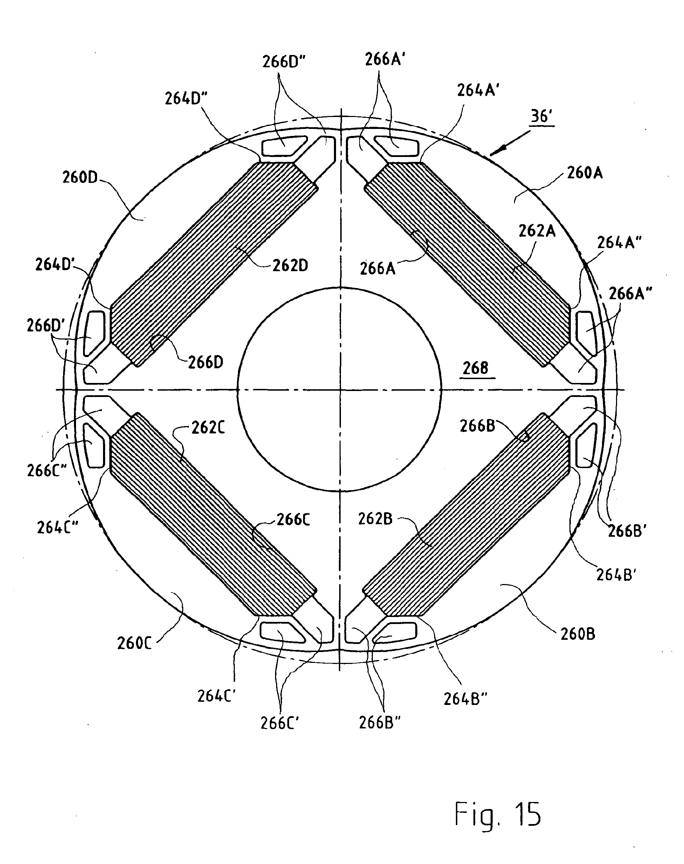

**Fig. 15** zeigt - in vergrößerter Darstellung - einen Rotor 36', mit dem eine induzierte Spannung erzeugt werden kann, welche wesentlich besser an die Sinusform angenähert ist. Der Rotor 36' hat vier ausgeprägte Pole mit Polschuhen 260A bis 260D, deren äußere Form zur Erzeugung eines sinusförmigen Magnetflusses ausgebildet ist, ebenso wie in Fig. 9 und 10 dargestellt und beschrieben. Der Stator entspricht der Darstellung gemäß Fig. 9 und ist deshalb nicht nochmals dargestellt.

Die Magnete 262A, 262B, 262C, 262D haben auf ihrer radial äußeren Seite trapezartig abgeschrägte Ecken 264A', 264A", 264B', 264B", etc. und die Taschen 266A bis 266D zur Aufnahme dieser Magnete haben eine entsprechende Form und setzen sich jeweils nach links fort in eine zweiteilige Ausnehmung 266A' und nach rechts in eine zweiteilige Ausnehmung 266A" und analoge Ausnehmungen 266B', 266B" etc. Diese Ausnehmungen sind jeweils unterteilt durch einen magnetischen Nebenschluss, dessen Funktion nachfolgend beschrieben wird.

Fig. 15 zeigt einen Winkel beta, der die Breite der Magnete 262A bis 262D charakterisiert. Er wird definiert als der Winkel zwischen zwei Geraden 186, 188, die durch die Mitten der schrägen Flächen 264D', 264D" gehen, und beträgt hier etwa 58° mech. = 116° el.

Dieser Winkel beta ist wichtig für die Größe des bereits erläuterten Nutruckens, also der sogenannten cogging torque, die möglichst klein sein sollte. Bei dieser Bauweise mit abgeschrägten Magneten 262 liegt das Optimum des Winkels beta etwa zwischen 110 und 120° el.

Dieses Optimum wird wie folgt ermittelt: Zuerst ermittelt man durch Berechnung einen theoretischen optimalen Wert für beta bei der gewählten Motorbauweise. Wegen der nichtlinearen Effekte im magnetischen Kreis entspricht dieses rechnerische Optimum nicht exakt dem tatsächlichen Optimum. Deshalb macht man anschließend im Bereich des rechnerischen Optimums praktische Versuche und ermittelt dadurch das tatsächliche Optimum, bei dem das Nutruckmoment am kleinsten wird und das für eine vorgegebenen Bauweise des Motors in einem sehr engen Winkelbereich von beta liegt.

Dieses Optimum differiert je nach Bauweise, z.B. um 1 bis 5° el., entsprechend einer Differenz der Magnetbreite, die gewöhnlich in der Größenordnung von 0,5 mm liegt, oder anders gesagt, eine Differenz der Magnetbreite von 0,5 mm kann den Unterschied zwischen einem guten und einem schlechten Motor bedeuten.

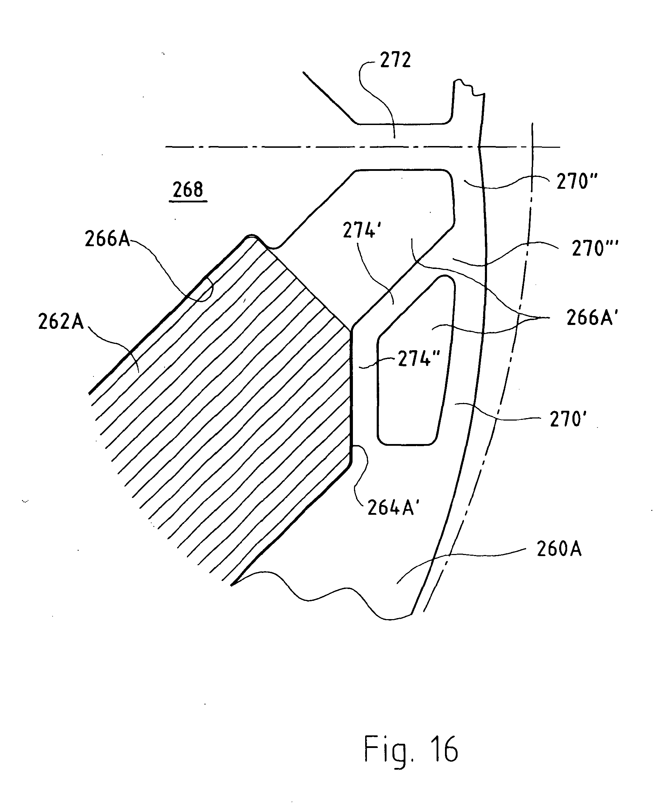

Zur weiteren Erläuterung wird auf die noch stärker vergrößerte Darstellung gemäß **Fig. 16** Bezug genommen, welche einen vergrößerten Ausschnitt aus Fig. 15 zeigt. Zur mechanischen Befestigung des Polschuhs 260A am magnetischen Rückschluss 200 dient ein dünner Steg mit zwei Abschnitten 270' und 270", die über einen Zielbereich 270"' miteinander verbunden sind, sowie ein radialer Abschnitt 272. Der Zielbereich 270"' liegt wie dargestellt in der Nähe der Polgrenze 271 zum benachbarten Rotorpol 260D. Dies hat seinen Grund darin, dass in Fig. 16 die untere der beiden Ausnehmungen 266A' nicht zu klein sein darf, damit sie preiswert hergestellt werden kann, gewöhnlich durch Stanzen. [Wenn diese Ausnehmung zu klein wird, muss sie durch kostspielige Verfahren hergestellt werden, z.B. durch Erodieren.]

Die Abschnitte 270' und 270" sind im Betrieb in der Sättigung und wirken deshalb praktisch wie Luft.

Der Zielbereich 270"' ist über einen magnetischen Nebenschluss 274', 274", welcher sich durch den Hohlraum 266A' erstreckt, mit einem Quellbereich verbunden, nämlich der schrägen Seite 264A' des Permanentmagneten 262A, so dass von diesem Quellbereich 264A' über den magnetischen Nebenschluss 274", 274' ein zusätzlicher kleiner magnetischer Fluss in den Zielbereich 270"' eingespeist wird. Es hat sich gezeigt, dass durch diese Maßnahme die Form der induzierten Spannung wesentlich stärker an die Sinusform angenähert werden kann. Da der magnetische Nebenschluss 274', 274" im Inneren des Rotors 36' verborgen ist, hat dieser Nebenschluss keinen wesentlichen Einfluss auf die Amplitude des Nutruckmoments, so dass eine Optimierung des Nutruckmoments (durch Veränderung der Breite der Dauermagnete 262) und eine Optimierung des elektromagnetischen Drehmoments durch Flusseinspeisung weitgehend unabhängig voneinander möglich sind.

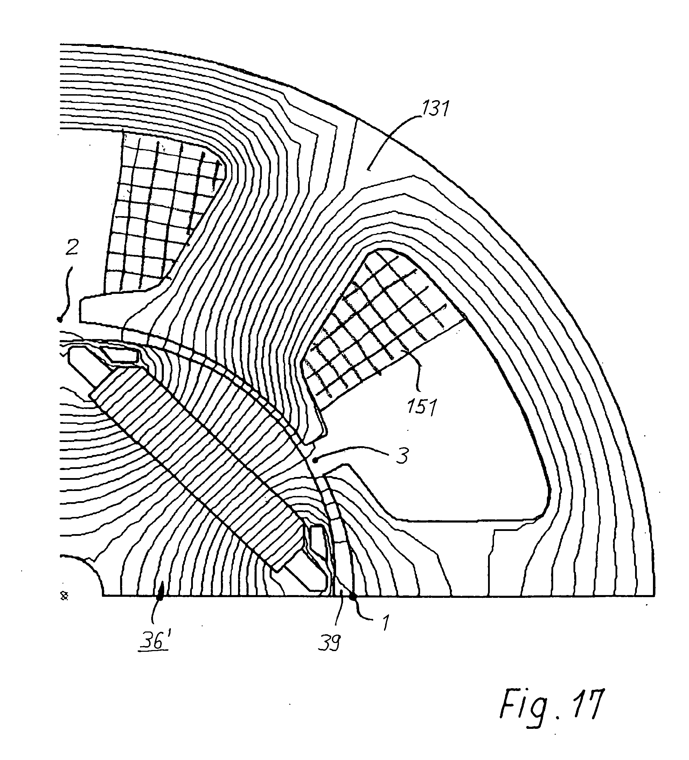

**Fig. 17** zeigt, dass durch diese Maßnahme die Flussverteilung im Luftspalt 39 besser an die Sinusform angenähert werden kann, weil im Bereich der Pollücken (des Rotors 36') ein kleiner magnetischer Fluss eingespeist wird.

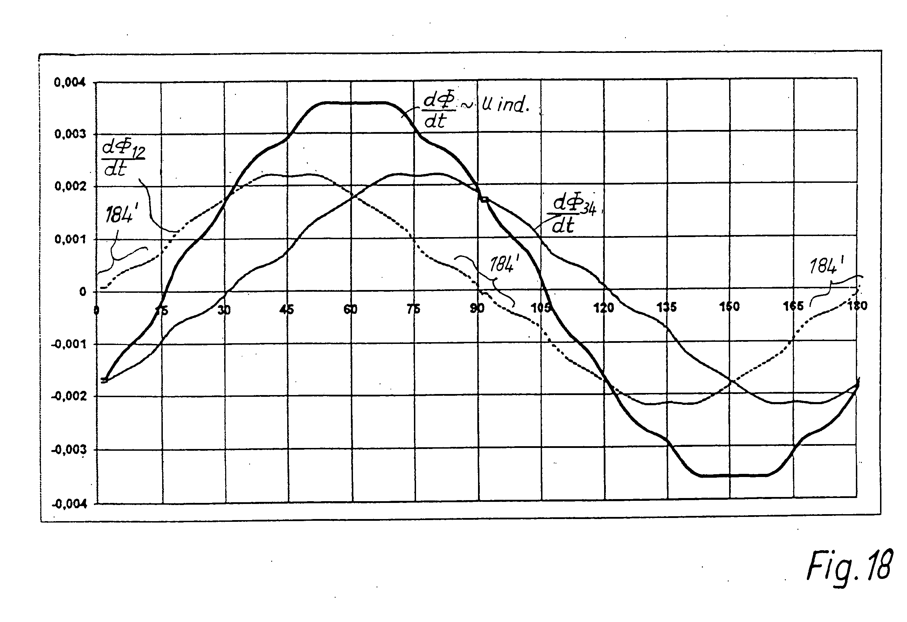

**Fig. 18** zeigt eine Darstellung analog Fig. 12, aber für einen Motor mit einem Rotor 36' gemäß Fig. 15 bis 17. Der Stator entspricht der Darstellung gemäß Fig. 9 und ist deshalb in den Fig. 15 bis 17 nicht nochmals dargestellt. Die Bezeichnungen, die in Fig. 18 verwendet werden, sind dieselben wie in Fig. 12, und es wird deshalb auf die Erläuterungen zu Fig. 12 verwiesen, um Wiederholungen zu vermeiden.

Vergleicht man Fig. 18 mit Fig. 12, so sieht man, dass die Flussänderung dØ12/dt in den Bereichen 184' um die Nulldurchgänge herum einen wesentlich steileren Verlauf hat als in Fig. 12, was einen günstigeren Verlauf des Drehmoments ergibt. Addiert man, wie bei Fig. 12 beschrieben, die beiden um 120° el. verschobenen Verläufe zu der Summenkurve dØ/dt, so erkennt man, dass deren Verlauf wesentlich besser an eine Sinusform angenähert ist. Die induzierte Spannung uind hat, wie bereits erläutert, einen Verlauf, der mit dem von dØ/dt praktisch identisch ist.

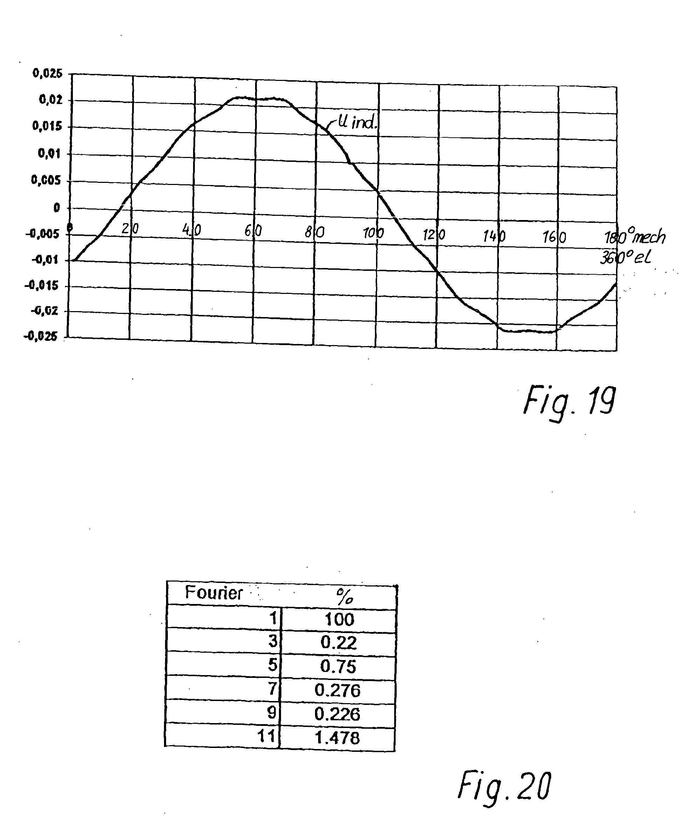

**Fig. 19** zeigt nochmals den Verlauf von Uind gemäß Fig. 18, also den (berechneten) Verlauf der induzierten Spannung Uind für den Rotor 36' nach den Fig. 15 bis 17. Ersichtlich hat dieser Verlauf eine bessere Annäherung an die Form einer Sinuswelle als der Verlauf nach Fig. 12.

Fig. 20 zeigt die Fourieranalyse für die Spannung gemäß Fig. 19. Ein Vergleich mit Fig. 14 ergibt, dass die 5. und 7. Oberwelle stark abgenommen haben, während die 3., 9. und 11. Oberwelle etwas größer geworden sind. In der Praxis ergibt sich ein wesentlich besseres elektromagnetisches Drehmoment bei einem Motor, der mit einem Rotor 36' gemäß Fig. 15 bis 17 ausgerüstet ist.

Die Rotorform gemäß Fig. 15 bis 17 eignet sich besonders gut für kleine Motoren, hat aber den Nachteil, dass durch die Abschrägungen 264A', 264A" etc. der Permanentmagnete relativ wenig Magnetmaterial im Rotor 36' untergebracht werden kann.

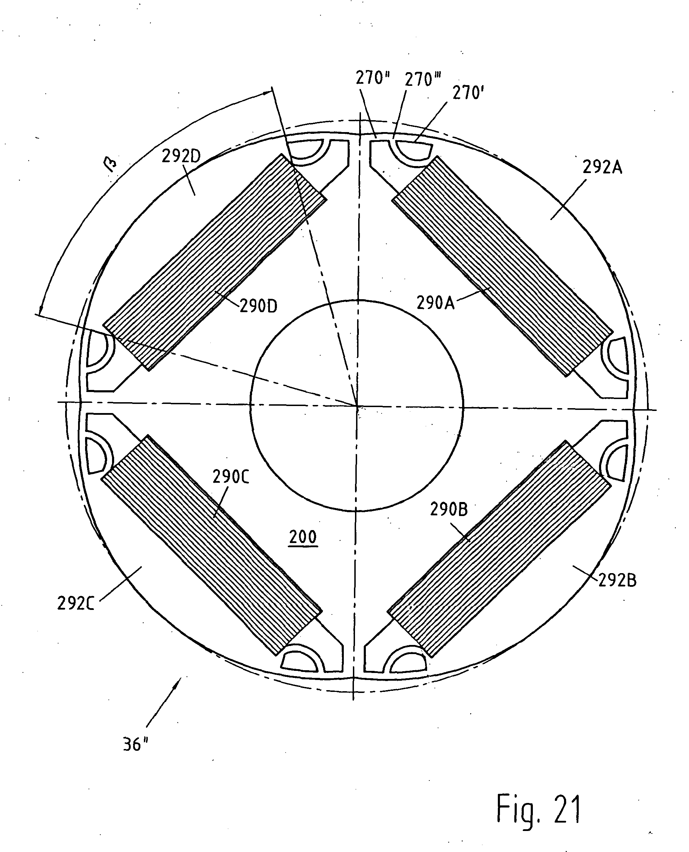

Bei größeren Motoren wird man deshalb Magnete mit rechteckförmigem Querschnitt vorziehen. Eine derartige Variante ist in Fig. 21 dargestellt. Bei einer solchen Variante ergibt sich eine etwas andere Form des magnetischen Nebenschlusses.

**Fig. 21** zeigt einen vierpoligen Rotor 36", der für die Verwendung von Permanentmagneten 290A bis 290D mit rechteckförmigem Querschnitt ausgelegt ist, um die Motorleistung zu erhöhen. Die Polschuhe der ausgeprägten Rotorpole sind mit 292A bis 292D bezeichnet und zur Erzeugung einer sinusförmigen Flussverteilung ausgelegt. Die Magnete 290 haben bei der ausgeführten Version dieses Motors die Maße 17,6 x 4,5 x 27 mm. Der Außendurchmesser des Rotors 36" betrug 41,2 mm. Der Winkel beta betrug bei diesem Ausführungsbeispiel 126° el.

Dieser Rotor 36" verwendet zum Halten der Rotorpolschuhe 292A bis 292D dünne Stege, die wie in Fig. 15 und 16 mit 270', 270" und 270"' bezeichnet sind.

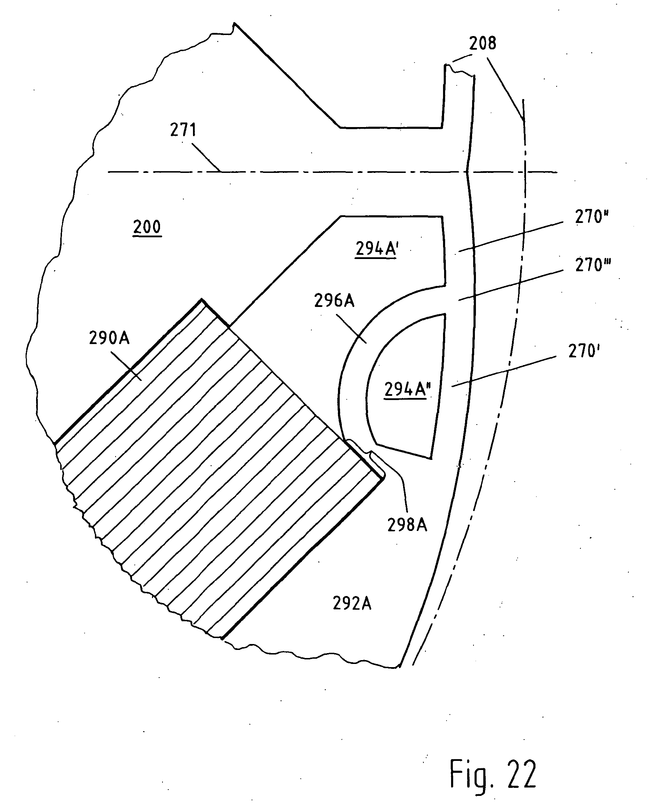

Links und rechts von den Rotormagneten 290 befinden sich jeweils zweiteilige Hohlräume 294A', 294A", etc., vgl. Fig. 22, die durch einen magnetischen Nebenschluss 296A unterteilt sind. Z.B. erstreckt sich der magnetische Nebenschluss 296A, wie in Fig. 22 dargestellt, von einem Quellabschnitt 298A des Magneten 290A zum Zielbereich 270"', der hier etwa in der Mitte zwischen dem Quellabschnitt 298A und der Polgrenze 271 liegt und an dem die Flusseinspeisung erfolgt. Die Lage des Zielbereichs 270"' wird hauptsächlich dadurch bestimmt, dass der Hohlraum 294A" aus fertigungstechnischen Gründen nicht zu klein werden darf. Durch geeignete Wahl der Breite des Quellabschnitts 298A kann die Größe des magnetischen Flusses gesteuert werden, der über den magnetischen Nebenschluss 296A in den Zielbereich 270"' eingespeist wird.

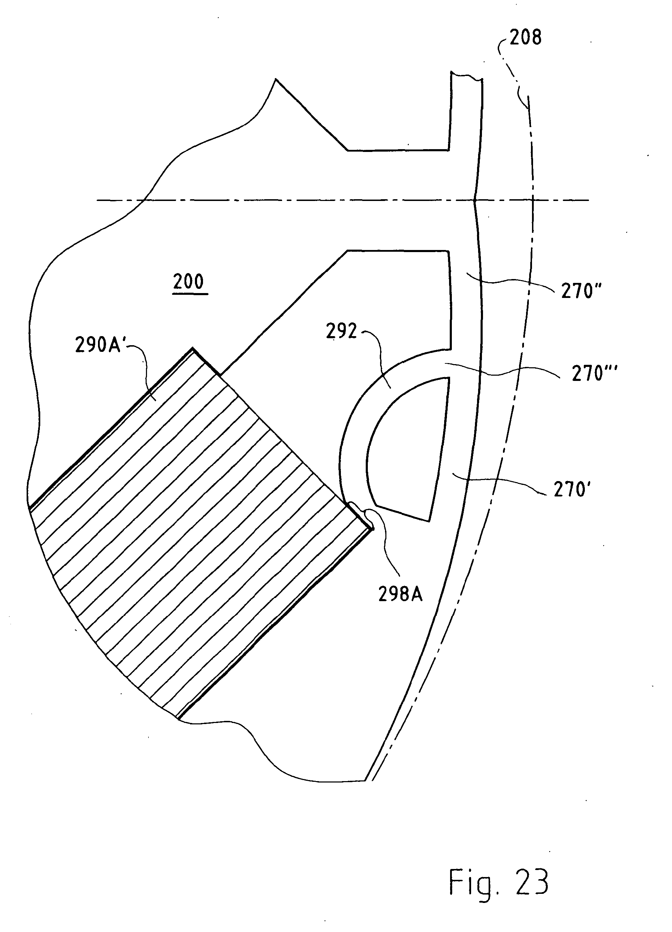

**Fig. 23** zeigt eine Variante hierzu, bei welcher der Quellabschnitt 298A etwas schmäler ist. Für diese Variante ergaben sich folgende Abmessungen der Magnete 290A' etc.: 16,8 x 4,5 x 27 mm, Winkel beta = 120° el. Hier hat also der Magnet 290A' eine etwas kleinere Winkelerstreckung beta als in Fig. 21, wodurch seine Breite im Vergleich zu Fig. 21 und 22 von 17,6 auf 16,8 mm abnimmt, also um 0,8 mm. So müssen für jeden einzelnen Fall durch Optimierungsprozesse die optimalen Maße für die Dauermagnete ermittelt werden, um das Nutruckmoment möglichst klein zu halten und um gleichzeitig durch Flusseinspeisung eine Form des elektromagnetisch erzeugten Drehmoments zu erhalten, die der Idealform möglichst nahe kommt.

Die dargestellten beispielhaften Varianten zeigen, dass bei der Erfindung eine Vielzahl von Abwandlungen und Modifikationen möglich ist, ohne das erfinderische Konzept zu verlassen.

## Patentansprüche

1. Elektromotor, insbesondere Innenläufermotor, welcher aufweist:
Einen Stator (28) mit einer mehrphasigen Statorwicklung;
einen vom Stator (28) durch einen Luftspalt (39) getrennten Rotor (36'; 36'; 36"), welcher auf seiner dem Luftspalt (39) zugewandten Seite eine Mehrzahl von ausgeprägten Polen mit dem Luftspalt (39) zugewandten Polschuhen (260A, 260B, 260C, 260D; 292A, 292B, 292C, 292D) und auf seiner vom Luftspalt (39) abgewandten Seite einen magnetischen Rückschluss (yoke) (200) aufweist, welche Polschuhe (260A, 260B, 260C, 260D; 292A, 292B, 292C, 292D) zur Erzeugung einer sinusförmigen induzierten Spannung (Uind) in der Statorwicklung dienen;
eine zwischen dem magnetischen Rückschluss (200) und einem Polschuh (260A, 260B, 260C, 260D; 292A, 292B, 292C, 292D) vorgesehene Ausnehmung (266A, 266B, 266C, 266D), in welcher mindestens ein Permanentmagnet (262A, 262B, 262C, 262D; 290A, 290B, 290C, 290D) angeordnet ist und an welche Ausnehmung (266A, 266B, 266C, 266D) sich auf jeder Seite des mindestens einen Permanentmagneten (262A, 262B, 262C, 262D; 290A, 290B, 290C, 290D) etwa in Umfangsrichtung ein magnetisch schlecht leitender Bereich anschließt, der auf seiner dem Luftspalt (39) zugewandten Seite an einen Halteabschnitt ( 270', 270") aus ferromagnetischem Werkstoff angrenzt, welcher dazu dient, den Polschuh (260A, 260B, 260C, 260D; 292A, 292B, 292C, 292D) mechanisch mit dem magnetischen Rückschluss (200) zu verbinden;
und mindestens einen magnetischen Nebenschluss (274', 274"; 290; 292; 296A), welcher sich von einem dem Luftspalt (39) näher liegenden Quellabschnitt (264A'; 298A) des mindestens einen Permanentmagneten (262A, 262B, 262C, 262D; 290A, 290B, 290C, 290D) durch einen zu diesem Abschnitt benachbarten magnetisch schlecht leitenden Bereich hindurch zu einem Zielbereich (270"') des betreffenden Halteabschnitts (270', 270") erstreckt, um an diesem Zielbereich (270"') einen zusätzlichen magnetischen Fluss von diesem Permanentmagneten (262A, 262B, 262C, 262D) einzuspeisen.

2. Elektromotor nach Anspruch 1, bei welchem der magnetische Rückschluss (200) des Rotors (36'; 36"), seine Polschuhe (260A, 260B, 260C, 260D; 292A, 292B, 292C, 292D), die Halteabschnitte ( 270', 270") und die magnetischen Nebenschlüsse (274', 274"; 290; 292; 296A) in Blechen (116) eines Blechpakets ausgebildet sind.

3. Elektromotor nach Anspruch 2, bei welchem zum Erzeugen eines magnetisch schlecht leitenden Bereichs an der betreffenden Stelle mindestens eine Ausnehmung (266A'; 294A', 294A") in den Blechen ausgebildet ist.

4. Elektromotor nach Anspruch 1 oder 2, bei welchem die Halteabschnitte (270', 270") aus ferromagnetischem Werkstoff im Betrieb zumindest bereichsweise magnetisch im wesentlichen gesättigt sind.

5. Elektromotor nach mindestens einem der vorhergehenden Ansprüche, bei welchem sich ein magnetischer Nebenschluss (274', 274"; 290; 292) zu einem Zielbereich (270"') erstreckt, welcher durch einen im Betrieb zumindest bereichsweise gesättigten Teil (270') des Halteabschnitts mit dem betreffenden Polschuh (260A, 260B, 260C, 260D; 292A, 292B, 292C, 292D) verbunden ist.

6. Elektromotor nach mindestens einem der vorhergehenden Ansprüche, bei welchem sich ein magnetischer Nebenschluss (274', 274"; 290; 292) zu einem Zielbereich (270"') erstreckt, welcher über einen im Betrieb zumindest bereichsweise gesättigten Teil (270") des Halteabschnitts mit dem magnetischen Rückschluss (200) verbunden ist.

7. Elektromotor nach mindestens einem der vorhergehenden Ansprüche, bei welchem der mindestens eine Permanentmagnet (262A, 262B, 262C, 262D) auf seiner näher beim Luftspalt (39) liegenden und einem benachbarten magnetisch schlecht leitenden Bereich zugewandten Seite eine abgeschrägte Kante (264A', 264A", ..) aufweist, welche eine abgeschrägte Grenzfläche dieses Permanentmagneten (262A, 262B, 262C, 262D) bildet.

8. Elektromotor nach Anspruch 7, bei welchem sich der magnetische Nebenschluss (274', 274") im wesentlichen von dieser abgeschrägten Grenzfläche (264A', 264A", ..) zum Zielbereich (270"') erstreckt.

9. Elektromotor nach Anspruch 7 oder 8, bei welchem der Polschuh (260A, 260B, 260C, 260D) mindestens einen Teil der abgeschrägten Grenzfläche (264A', 264A", ..) überdeckt.

10. Elektromotor nach mindestens einem der Ansprüche 1 bis 6, bei welchem der mindestens eine Permanentmagnet (290A; 290A') auf seiner einem ihm zugeordneten magnetisch schlecht leitenden Bereich zugewandten Seite einen Querschnitt aufweist, dessen seitliche Begrenzung im wesentlichen orthogonal in die dem Polschuh (260A, 260B, 260C, 260D) zugewandte Grenzfläche dieses Permanentmagneten (262A, 262B, 262C, 262D) übergeht, und sich der magnetische Nebenschluss (296A) von einem dem Luftspalt (39) näher liegenden Quellabschnitt (298A) dieser seitlichen Begrenzung durch den magnetisch schlecht leitenden Bereich hindurch zum Zielbereich (270"') des Halteabschnitts erstreckt.

11. Elektromotor nach Anspruch 10, bei welchem sich der Polschuh (260A, 260B, 260C, 260D) über die seitliche Begrenzung hinaus erstreckt.

12. Elektromotor nach einem der vorhergehenden Ansprüche, bei welchem das Verhältnis der Breite eines Rotormagneten (214; 262; 290A) zur Polteilung des betreffenden Rotorpoles (206) im Hinblick auf die Erzeugung eines niedrigen Nutruckmoments selektiert ist.

13. Elektromotor nach einem der vorhergehenden Ansprüche, bei welchem die mittlere Winkelerstreckung (beta) eines Rotormagneten (214; 262, 290) etwa 115 bis 135° el. beträgt.

14. Verfahren zum Beeinflussen der Form der induzierten Spannung (uind) eines elektronisch kommutierten Elektromotors, bei welchem der Rotor (36'; 36") zwischen seinen Polschuhen (260A, 260B, 260C, 260D; 292A, 292B, 292C, 292D) und seinem magnetischen Rückschluss (200) Taschen aufweist, in welche Permanentmagnete (262A, 262B, 262C, 262D) eingesetzt sind, und sich - in Umfangsrichtung gesehen - im Anschluss an diese Taschen magnetisch schlecht leitende Zonen befinden, die in Richtung zum Luftspalt (39) durch Stege begrenzt sind, welche im Betrieb im wesentlichen im Bereich der magnetischen Sättigung arbeiten, mit folgendem Verfahrensschritt:
In die Stege wird jeweils an einem Zielbereich (270"') ein zusätzlicher magnetischer Fluss vom benachbarten Permanentmagneten (262A, 262B, 262C, 262D) durch die magnetisch schlecht leitende Zone hindurch eingespeist.

15. Verfahren nach Anspruch 14, bei welchem der magnetische Fluss in einen Zielbereich (270"') eingespeist wird, welcher etwa im Mittelabschnitt des betreffenden Stegs (270', 270") liegt.

16. Verfahren nach Anspruch 14, bei welchem der magnetische Fluss in einen Zielbereich (270"') des betreffenden Stegs (270', 270") eingespeist wird, welcher in der Nähe der Polgrenze (271) zu einem benachbarten Rotorpol liegt.

17. Verfahren nach einem der Ansprüche 14 bis 16, bei welchem der zusätzliche magnetische Fluss von einem dem Luftspalt (39) benachbarten Bereich des Permanentmagneten (262A, 262B, 262C, 262D) über einen magnetischen Nebenschluss (274', 274"; 290; 292) im Inneren des Rotors (36'; 36") in den Zielbereich (270"') eingespeist wird.
